# EUROPEAN PATENT APPLICATION

(11) **EP 2 868 917 A1**
(43) Date of publication of application: **06.05.2015**
(21) Application number: 13190686.9
(22) Date of filing: 29.10.2013
(51) Int. Cl.: F03D 5/00, D07B 5/00

(54) **Tether and system for airborne wind energy production**

(71) Applicant: Ampyx Power B.V., 2521 AL The Hague (NL)
(72) Inventor: Dr. R. Ruiterkamp, 2586 GH The Hague (NL)
(74) Representative: Seemann & Partner

(57) **Abstract**

The invention provides for a tether (44) for tethering an aircraft (10) for airborne wind energy production to a ground station (40), wherein at least a section of said tether (44) comprises a core part (72) of regular geometric shape and at least one spiral part (76, 76', 76") arranged in a helical shape around said core part (72), wherein a surface of said tether (44) comprises at least a part of a surface (72) of said core part and at least a part of a surface of said spiral part (76, 76', 76"). The invention further provides for a system for airborne wind energy production comprising an aircraft (10), a ground station (40) and a tether (44) as mentioned above.

## Description

The invention relates to a tether for tethering an aircraft for airborne wind energy production to a ground station.

The invention further relates to a system for airborne wind energy production comprising an aircraft, a ground station and a tether.

Novel concepts for electric power production from wind or airborne wind energy production explore airplanes or wings tethered to the ground. Two major technologies can be distinguished, which are often referred to as the flying-generator-concept and the pumping-kite-concept, respectively. The flying-generator-concept is characterized by conversion of wind energy to electrical energy onboard the aircraft, which consequently carries a generator, wherein the electric energy produced by the generator is transferred to the ground by a cable generally comprised by the tether. In contrast, at the pumping-kite-concept energy is transferred mechanically to the ground, in particular via pulling the tether, and is converted to electrical energy by a ground-based generator.

Common to both concepts is a tether or line or cable moving fast through air. The moving tether accounts for large fraction of the overall aerodynamic drag of the tethered aircraft. Accordingly, attempts are made in the prior art for optimizing the aerodynamic characteristics of tethers. For instance, the document WO 2009/142762 A1 discloses a variety of tethers with non-circular cross-section for reduced drag by reducing vortex shedding.

Another issue not addressed in the prior art so far is noise induced by the fast moving tether. This might become a problem once commercial plants are available. In particular, acceptance by the general public is crucial for implementation of this novel technology, and acceptance might disappear in case the technology is perceived as disturbingly loud or noisy.

It is therefore an object of the present invention to reduce noise induced by a tethered aircraft moving through air at high velocity.

According to the invention, this problem is solved by a tether for tethering an aircraft for airborne wind energy production to a ground station, wherein at least a section of said tether comprises a core part of regular geometric shape and at least one spiral part arranged in a helical shape around said core part, wherein a surface of said tether comprises at least a part of a surface of said core part and at least a part of a surface of said spiral part.

In terms of the invention, a surface in particular refers to an outer surface or skin exposed to air surrounding said tether. Thus, said surface of said tether or a shape of said surface, respectively, in particular determines aerodynamic properties of said tether.

In case the spiral part extends only over a section along the length of the said tether, said section preferably is arranged at or close to the aircraft, where the velocity of the tether relative to surrounding air generally is largest compared to other sections along the length of said tether.

In particular, the spiral part extends over a section of the tether where otherwise aerodynamically induced resonances of the tether, in particular with acoustically relevant frequencies, are to be expected. Depending on the specific parameters of an implementation according to the invention, including but not limited to the geometry of the tether, its surface characteristics, and/or its Reynold's number at typical operation conditions, said section may also be arranged apart from the aircraft and/or apart from the ground station.

The invention prevents coherence of vortex shedding along the length of the tether. Compared to coherent shedding of few large vortices, for instance a so-called Kármán vortex street, the invention results in many small vortices. In particular, these vortices are mutually damping, so that air movements perceived as noise are restricted to regions close to the tether and noise emission of the tethered aircraft is reduced.

It is a further advantage of the invention that incoherent vortex shedding also dampens resonance oscillations of the tether itself. This comes unexpected, since neither length nor tension of the tether is constant during operation and consequently resonance oscillations span a very large range of possible frequencies.

In particular, oscillating tether torsions are avoided by the circular or spiral symmetry of the tether according to the invention, solving another problem reported for known tethers. Especially for aerodynamically optimized tethers from the prior art with non-symmetric, for instance drop-shaped, cross section, significant excitations of oscillating torsions have been reported.

In terms of the invention, said regular geometric shape of said core part in particular refers to a polygonal or elliptical or circular cross-section.

In terms of the invention, a tether can also be referred to as a cable or a line or a rope.

A thickness of said spiral part in radial direction preferably measures between 10% and 40%, in particular approximately 20%, of a diameter of said core part.

A pitch of the spiral part in longitudinal direction of said tether preferably measures between 10 and 20 times, in particular approximately 15 times, a diameter of said core part.

These values or dimensions have been shown to be most effective in avoiding coherent vortex shedding.

In terms of the invention, pitch of a spiral part in particular refers to a length along said tether or said core part, respectively, corresponding to one complete turn or winding of said spiral part around said core part.

An especially preferred embodiment of the invention is characterized in that said core part comprises a load carrier for carrying a mechanical load or tension exerted on the tether.

In particular, the load carrier is straight and preferably made from strong, light and/or reckless fibers or filaments. This way, the tether offers maximal stability in length under varying loads and ensures optimal transfer of mechanical load or pull or force from the aircraft to the ground station.

It is further preferred that said spiral part comprises a signal line, in particular an electrical or optical signal line.

This way, the signal line is longer than the overall length of the tether, wherein the extra length due to the spiral or helical arrangement acts as a buffer once the tether or a load carrier of the tether slightly stretches under load. Consequently, no significant force or load is excerpted on the signal line, minimizing the risk of failures and line breaks.

Similarly, it is preferred that said spiral part comprises an electrical power line.

A power line may comprise a larger and/or thicker conductor and more insulation or insulating material than a signal line. Apart from this, the invention in particular offers the same advantages for a power line than mentioned above in case of a signal line.

According to the invention, said tether may comprise more than one, in particular three, spiral parts, which are in particular arranged around said core part in regular distance with respect to each other.

Especially for embodiments according to the invention based on the flying-generator-concept, the dimensions of a power line may exceed the aerodynamically advantageous dimensions of said spiral part. In this case, the power line may be split into several wires and distributed over more than one spiral part and/or the core part.

The underlying technical problem of the invention is also solved by a system for airborne wind energy production comprising an aircraft, a ground station and a tether for tethering said aircraft to said ground station, wherein at least a section of said tether comprises a core part of regular geometric shape and at least one spiral part arranged in a helical shape around said core part.

Said tether in particular is a tether according to the invention described above.

The positive effects of the invention are best achieved if said section is arranged at or close to the aircraft. This is the part of the tether with the highest velocity relative to the surrounding air, where most of the noise induced by aerodynamic effects on the tether is expected.

In especially preferred embodiments of the invention, said ground station comprises a reel for the tether and an electrical generator connected to said reel for producing electricity from a tension exerted on the tether by said aircraft when flying away from said ground station due to wind forces acting on said aircraft.

In particular, the system according to the invention is preferably a system based on the pumping-kite-concept of airborne wind energy production. It is a particular advantage of the tether according to the invention that it has a regular, round cross section enabling it to be stored on a reel or a windlass drum.

It is especially preferred when said aircraft is a glider comprising steering means for pitching, rolling and yawing said glider when airborne.

It is another particular advantage of the tether according to the invention, that it provides or may provide for a signal connection and a power connection between the ground station and the aircraft. The invention therefor is in particular suitable for an aircraft or glider with onboard electric and/or electronic devices.

Onboard devices may comprise but are not limited to electric actuators for aerodynamically active surfaces, sensors for aircraft status and/or surrounding conditions and/or circuitry for flight control, and/or analog or digital communication electronics.

It is further preferred when the system according to the invention comprises communication means between said aircraft and said ground station, wherein said communication means include a signal line of said tether.

It is also preferred when a system according to the invention comprises power supply means for said aircraft, wherein said power supply means include a power line of said tether.

The underlying problem of the invention is also solved by use of a signal line and/or a power line to form a spiral arranged around a tether for tethering an aircraft for airborne wind energy production to a ground station along at least a section of said tether.

In terms of the invention, a spiral may also be referred to as a helix.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1a: schematically a system according to the invention operated in a first operation mode;
- Fig. 1b: schematically the system according to the invention operated in a second operation mode;
- Fig. 2: schematically a section of a tether according to the invention; and
- Fig. 3: schematically a cross-sectional view along line A-A from fig. 2.

In the drawings, the same or similar types of elements or respectively corresponding parts are provided with the same reference numbers in order to prevent the item from needing to be reintroduced.

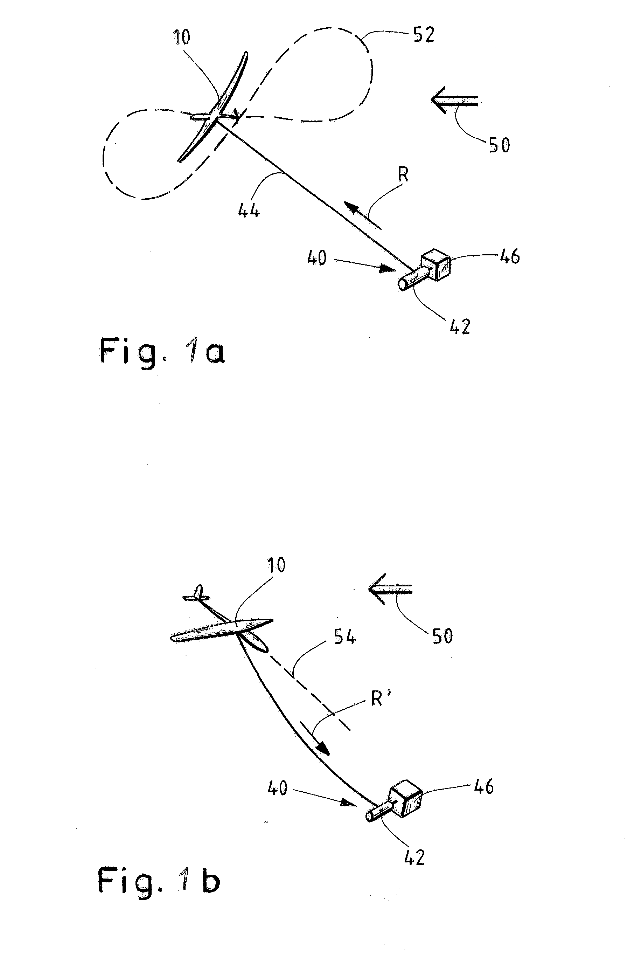

Figs. 1a and 1b show an exemplary embodiment of a system for electric power production from wind according to the invention.

The airborne or potentially airborne part of the system comprises a glider 10, which in the embodiment depicted in fig. 1 is designed to be a fixed wing aircraft. In flight, the glider 10 is for instance manoeuvred by control surfaces, such as ailerons, elevators and/or a rudder.

The glider 10 is connected to the ground station 40 via a tether 44. At the ground station 40, excess length of the tether 44 is stored on a reel 42, which is connected to a rotating electrical machine 46. The rotating electrical machine 46 is connected to an electricity storage and/or distribution system (not shown) such as a power grid, a transformer station or an energy reservoir. Those skilled in the art will appreciate that the power storage and/or distribution system can be any device or system capable of receiving electricity from and delivering electricity to the rotating electrical machine. An energy reservoir according to the invention may store electric energy or, by means of energy conversion, energy in any other appearance, such as thermal energy or mechanic energy.

In other embodiments according to the invention, the aircraft 10 can be a kite controlled from the ground by means of steering lines. In these types of embodiments, the tether 44 may be one of the steering lines and/or all steering lines may be designed as tethers 44 in terms of the invention.

The system according to the invention is alternately operated in a first operation mode for production of electric power, illustrated in fig. 1a, and a second operation mode for system recovery, illustrated in fig. 1 b.

In the first operation mode, which in particular is an energy production operation mode, the glider 10 is controlled or steered to follow a high lift flight pattern indicated by line 52 downwind of the ground station 40. In the figures, the direction of the wind is indicated by arrow 50. During crosswind flight, in particular fast cross-wind flight, the glider 10, in particular an airfoil or wing of the glider 10, generates a lift force much larger than required to keep the glider 10 at a given altitude. As a consequence, the glider 10 exerts a pull on the tether 44, which is correlated to the excess lift force.

The pull on the tether 44 is used for reeling out the tether 44 from the reel 42 in direction of arrow R, thereby inducing a rotation of the reel 42. The resulting torque, which in particular depends on the diameter of the reel 42 and the force with which the tether 44 is pulled, is transmitted to the electrical machine 46, where the mechanical energy is transformed to electric power. Optionally, a gearbox is arranged between the reel 42 and the electrical machine 46, which is not shown in the figures for reasons of simplicity.

As long as the tether 44 is reeled out, the glider 10 flies away from the ground station 40. Thus, the overall length of the tether 44 limits maintaining the first operation mode.

For recovery of the tether 44, the glider 10 is controlled or steered to fly towards the ground station 40. As the glider 10 approaches the ground station 40, the free length of the tether 44 is shortened and the tether 44 is reeled in onto the reel 42 as indicated by arrow R' by operating the electrical machine 46 as a motor rather than as a generator. The necessary power for instance is provided or delivered by the electricity storage and/or distribution system.

In the second operation mode, it is preferred that the pull on the tether 44 is as low as possible in order to minimize power consumption for reeling in the tether 44 as fast as possible in order to minimize the dead time, i.e. the period of time where no electric power is produced. The glider 10 therefore is controlled to follow a low lift flight pattern 54, which for instance is a descent or a fast dive of the glider 10 against the wind 50 towards the ground station 40. However, the low lift flight pattern 54 can also be an approach of the glider 10 towards the ground station 40 without loss in altitude, including a slight gain in altitude.

In particular during the first operation mode with fast cross-wind flight, the glider 10 and with it the tether 44 or at least the upper part of the tether 44 moves relative to the surrounding air at high velocities.

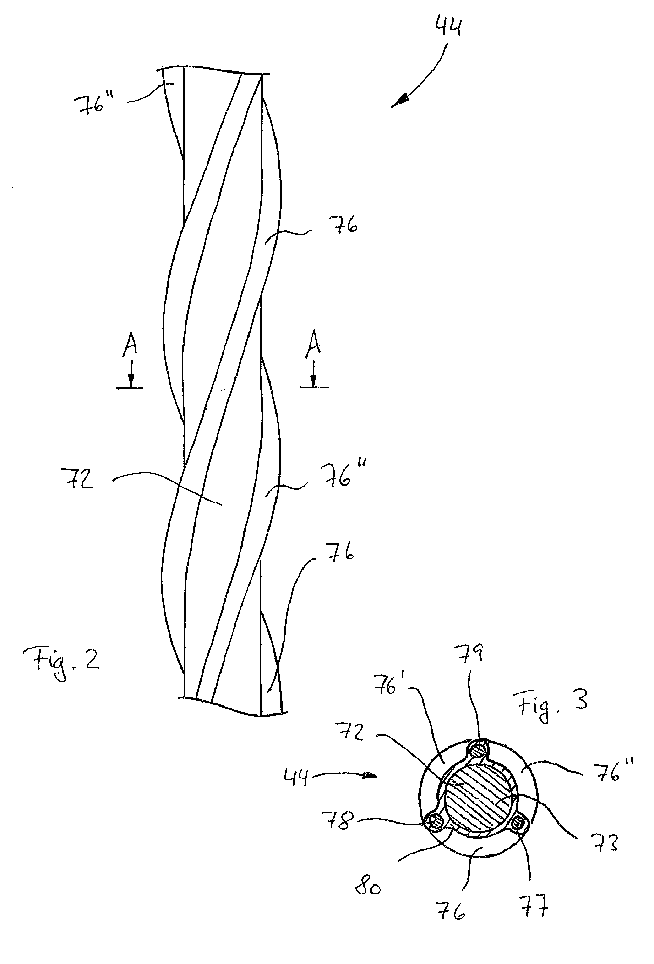

Fig. 2 shows a section of the tether 44 of the system according to the invention depicted in figs. 1a and 1b. The section shown for instance is a section from the upper part of the tether 44 close to the glider 10, where the velocity or speed of the tether 44 in relation to the surrounding air is expected to be highest.

The tether 44 comprises a core part 72 of essentially cylindrical shape and three spiral parts 76, 76', 76", which are arranged as spirals or helixes wound around said core part 72. The dimensions of the spiral parts 76, 76', 76" are for instance approximately equal within tolerances.

The spiral parts 76, 76', 76" have a thickness of 10% to 40%, in particular approximately 20%, of the diameter of the core part 72. In particular, the spiral parts 76, 76', 76" extend over the cylindrical surface of the core part 72 by their respective thickness, increasing the effective diameter of the tether 44, in particular the outermost diameter of the tether 44 including the spiral parts 76, 76', 76", to between 120% and 180%, in particular approximately 140%, of the diameter of the core part 72.

The spiral parts 76, 76', 76" each have a pitch of 10 times to 20 times, in particular approximately 15 times, the diameter of the core part 72. In terms of the invention, the pitch in particular refers to the length along the tether 44 or the core part 72, respectively, corresponding to one complete turn or winding of a spiral part 76, 76', 76" around the core part 72.

The spiral parts 76, 76', 76" are arranged around the core part 72 in regular or even or equal distance with respect to each other. In particular, the spiral parts 76, 76', 76" are spaced 120° in circumferential direction and by 1/3 of the pitch of each spiral part 76, 76', 76" in longitudinal direction, i.e. along the length of the tether 44 or the core part 72, respectively.

A cross-sectional view of the tether 44 at the cutting line A-A is shown in fig. 3.

The core part 72 comprises a mechanical load carrier 73, which is in particular a rope preferably made from strong, light and reckless fibres. Such fibres can in particular be made from aramid, for instance available by the commercial name "Kevlar", or from ultrahigh-molecular-weight polyethylene or UHMWPE, for instance available by the commercial name "Dyneema".

In the particular example according to the invention shown in fig. 3, the first spiral part 76 comprises a signal cable 7. The signal cable 77 may be an optical fibre or an electrical wire with one or more conductors made for instance from silver or copper. In particular, the signal cable 77 establishes a communication channel between the glider 10 and the ground station 40.

The second spiral part 76' comprises a power cable 78, for instance an electric wire with one or more conductors made for instance of copper. The power cable 78 establishes an electrical connection between the glider 10 and the ground station 40 for supply of electricity to electronics and other electrical equipment on board the glider 10.

The third spiral part 76" may comprise a ground cable 79 for safety reasons or for the electric return flux in conjunction with the signal cable 77 and/or the power cable 78.

The load carrier 73, the signal cable 77, the power cable 78, and the ground cable 79 are embedded in a common matrix 80, which holds said components in place and determines the outer shape of the tether 44 including the core part 72 and the spiral parts 76, 76', 76". It is evident for those skilled in the art that the outer shape or form of the matrix 80 including its surface structure determines the aerodynamic behaviour of the tether 44.

The matrix for instance is made from fabric or woven fibres, wherein for instance the fibres of the matrix 80 and the cables 77, 78, 79 described above are mutually woven around the load carrier 73 in a single production step.

In other embodiments according to the invention, the matrix 80 is made from flexible plastics such as rubber, silicone and/or thermoplastic materials, which in particular is casted around the prearranged load carrier 73 and cables 77, 78, 79.

In one embodiment of the invention, the tether 44 comprises the shape described above over its whole length.

In another embodiment of the invention, the tether 44 comprises the shape described above and shown in figs. 2 and 3 only along a section of its length, wherein said section in particular is a section at the end of the tether 44 being attached to the glider 20 or another aircraft, respectively.

Preferably, said section corresponds approximately to the minimal free length of the tether 44. Said minimal free length of the tether 44 correlates with the minimal distance of the glider 10 to the ground station 40 during normal operation of the system shown in figs. 1a and 1b, which corresponds to the moment of switch-over from the second operation mode, i.e. the recovery phase shown in fig. 1b, to the first operation mode, i.e. the energy production mode shown in fig. 1 a.

The remaining section or length of the tether 44, which is frequently bent to be stored on the reel 42 during reeling-in the tether 44 and straightened again during reeling-out the tether 44, for instance comprises a regular, in particular circular, elliptical or polygonal, cross-section. These kinds of regular cross-sections can be easily stored on the reel 42 and help to avoid damages to the aerodynamically relevant surface of the tether 44.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 10: glider
- 40: ground station
- 42: reel
- 44: tether
- 46: electrical machine
- 50: wind
- 52: high lift flight pattern
- 54: low lift flight pattern
- 72: core part
- 73: load carrier
- 76, 76', 76": spiral part
- 77: signal cable
- 78: power cable
- 79: ground cable
- 80: matrix

## Claims

1. Tether (44) for tethering an aircraft (10) for airborne wind energy production to a ground station (40), wherein at least a section of said tether (44) comprises a core part (72) of regular geometric shape and at least one spiral part (76, 76', 76") arranged in a helical shape around said core part (72), wherein a surface of said tether (44) comprises at least a part of a surface (72) of said core part and at least a part of a surface of said spiral part (76, 76', 76").

2. Tether (44) according to claim 1, **characterized in that** a thickness of said spiral part (76, 76', 76") in radial direction measures between 10% and 40%, in particular approximately 20%, of a diameter of said core part (72).

3. Tether (44) according to claim 1 or 2, **characterized in that** a pitch of the spiral part (76, 76', 76") in longitudinal direction of said tether (44) measures between 10 and 20 times, in particular approximately 15 times, a diameter of said core part (72).

4. Tether (44) according to any one of claims 1 through 3, **characterized in that** said core part (72) comprises a load carrier (73) for carrying a mechanical load or tension exerted on the tether (44).

5. Tether (44) according to any one of claims 1 through 4, **characterized in that** said spiral part (76, 76', 76") comprises a signal line (77), in particular an electrical or optical signal line (77).

6. Tether (44) according to any one of claims 1 through 5, **characterized in that** said spiral part (76, 76', 76") comprises an electrical power line (78).

7. Tether (44) according to any one of claims 1 through 6, **characterized in that** said tether (44) comprises more than one, in particular three, spiral parts (76, 76', 76"), which are in particular arranged around said core part (72) in regular distance with respect to each other.

8. System for airborne wind energy production comprising an aircraft (10), a ground station (40) and a tether (44), in particular according to any one of claims 1 through 7, for tethering said aircraft (10) to said ground station (40), wherein at least a section of said tether (44) comprises a core part (72) of regular geometric shape and at least one spiral part (76, 76', 76") arranged in a helical shape around said core part (72), wherein a surface of said tether (44) comprises at least a part of a surface (72) of said core part and at least a part of a surface of said spiral part (76, 76', 76").

9. System according to claim 8, **characterized in that** said section is arranged at or close to the aircraft.

10. System according to claim 8 or 9, **characterized in that** said ground station comprises a reel for the tether and an electrical generator connected to said reel for producing electricity from a tension exerted on the tether by said aircraft when flying away from said ground station due to wind forces acting on said aircraft.

11. System according to any one of claims 8 through 10, **characterized in that** said aircraft is a glider comprising steering means for pitching, rolling and yawing said glider when airborne.

12. System according to any one of claims 8 through 11, **characterized in that** said system comprises communication means between said aircraft and said ground station, wherein said communication means include a signal line of said tether.

13. System according to any one of claims 8 through 12, **characterized in that** said system comprises power supply means for said aircraft, wherein said power supply means include a power line of said tether.

14. Use of a signal line and/or a power line to form a spiral arranged around a tether for tethering an aircraft for airborne wind energy production to a ground station along at least a section of said tether.
